# EUROPEAN PATENT SPECIFICATION

(11) **EP 4 173 527 B1**
(45) Date of publication and mention of the grant of the patent: **18.09.2024**
(21) Application number: 21896318.9
(22) Date of filing: 02.07.2021
(51) Int. Cl.: A47G 21/04, A47G 21/02

(54) **ENVIRONMENT-FRIENDLY TABLEWARE**
UMWELTFREUNDLICHES GESCHIRR
VAISSELLE ÉCOLOGIQUE

(30) Priority: 30.11.2020 CN 202011371893
(43) Date of publication of application: 03.05.2023
(73) Proprietor: Sabert (Zhongshan) Limited, Zhongshan, Guangdong 528463 (CN)
(72) Inventor: WONG, Kam Yiu, Guangdong 528463 (CN)
(74) Representative: Murgitroyd & Company
(86) International application number: PCT/CN2021/104130
(87) International publication number: WO 2022/110810

(56) References cited:
- CN-A- 110 558 801
- CN-A- 112 353 213
- CN-A- 112 450 691
- CN-U- 204 838 969
- CN-U- 206 964 482
- CN-Y- 2 500 210
- CN-Y- 2 500 210
- CN-Y- 2 673 224
- DE-U1- 202019 001 830
- DE-U1- 202019 001 830
- GB-A- 1 451 204
- US-A1- 2005 155 229
- US-A1- 2017 340 152
- US-A1- 2019 365 127
- US-A1- 2020 128 983

## Description

### Technical Field

The present invention relates to the field of tableware, in particular to environment-friendly tableware made of environment-friendly materials such as paper pulp and the like.

### Background of the Invention

Disposable tableware is common tableware. Currently, disposable tableware is mainly plastic tableware, such as a plate, a table knife, a fork, a spoon and the like made of plastics. Plastic tableware is usually made of materials capable of directly contacting with food. With the increasing environmental awareness, people realize that most of the plastic tableware in the market is not biodegradable, such as PP, PET, PE and the like. Therefore, researches for replacing plastic tableware with degradable tableware have been considered. Among them, tableware made of polylactic acid (PLA) material is an industrially degradable tableware that can replace plastic tableware. However, polylactic acid tableware is expensive due to the high cost of polylactic acid materials, and thus it is difficult to be widely used.

Therefore, it is considered to use materials which are more environment-friendly and have low production cost to manufacture environment-friendly tableware. Among them, pulp molded tableware is relatively popular in the market in recent years, and such tableware has advantages and characteristics of replacing a part of plastic tableware. When the existing pulp molding tableware is produced, raw materials such as paper and plant residues need to be crushed to form a certain concentration of pulp aqueous solution. The water is sucked away through a vacuum system to form a wet blank, and the wet blank is then dried through high-temperature hot pressing to form a dry product.

However, pulp molded tableware is mainly made of paper and other raw materials, which has low hardness, and is prone to deform during use. For tableware such as a table knife, a fork, a spoon, and the like, the handles are prone to deform after being held for a while by a user. In addition, the teeth of the fork are prone to break, there are also problems such as bending and deformation between the handle and the main body of the table knife, fork, and spoon. Once tableware such as a table knife, a fork, a spoon and the like are bent and deformed, the tableware will no longer be used, and the popularization and the application of the pulp molding tableware are limited.

For this reason, some existing pulp molded tableware have flaps arranged on the periphery of the main body to increase the strength of the main body, but the problem of the deformation of the handle caused by force is not considered. For example, the cross section of the handle includes a bottom wall and two side walls. When a user holds the handle, the user often presses against the two side walls with fingers to cause the two side walls to deform towards the middle. Due to poor resilience of the pulp molded tableware, when the user holds the handle for a long time, the handle is prone to deform, especially when the user needs to cut off food by force, the handle is more prone to deform due to excessive holding force, which affects the use of the pulp molded tableware.

On the other hand, some existing pulp molded tableware are provided with reinforcing ribs on the main body or the handle, but the reinforcing ribs are concave towards one direction, namely the reinforcing ribs are concave towards one direction from one plane. In this way, the slope of the edges of the reinforcing ribs changes abruptly, and during molding, the edges of the reinforcing ribs are prone to cracking, resulting in an increase in the defective rate of pulp molded tableware.

US2020128983 discloses a spork structure includes a spoon body, a handle and two outer serrated plates, and US20050155229 discloses a type of plastic tableware which comprises a handle and a corresponding holding section.

### Technical Problem

The first object of the present invention is to provide an environment-friendly tableware which has high strength and is less prone to deform.

The second object of the present invention is to provide an environment-friendly tableware which is less prone to crack during molding and has a high yield.

### Technical Solutions

In order to achieve the above first object, the present invention provides a disposable environment-friendly tableware which is formed by molding and hot-pressing environment-friendly tableware according to claim 1, comprising a handle and a main body, wherein the main body is positioned at one end of the handle; on a cross section transverse to an extending direction of the handle, the handle has a bottom wall and side walls located at both ends of the bottom wall, a first edge flap is arranged at a free end of each side wall, a thickness of the first edge flap is equal to a thickness of each side wall, and corners of the first edge flap are rounded.

Preferably, the first edge flaps corresponding to the side walls respectively are on the same plane.

In a further solution, each of the side walls is inclined to a corresponding first edge flap, and an angle between each of the side walls and the corresponding first edge flap is an obtuse angle.

In a still further solution, a periphery of the main body is provided with a second edge flap, and a thickness of the second edge flap is equal to that of the main body.

In a still further solution, the environment-friendly tableware is a fork, the main body is provided with at least two teeth, and a periphery of each tooth is provided with the second edge flap.

In a still further solution, a concave reinforcing portion is provided in the middle of at least one of the teeth. In this way, the strength of the teeth is further increased through the reinforcing portion, and the situation of tooth breakage can be effectively avoided.

The environment-friendly tableware is provided with a reinforcing rib, the reinforcing rib extends from the handle to the main body, and the reinforcing rib comprises a concave portion and convex portions positioned at both ends of the concave portion on a cross section transverse to an extending direction of the reinforcing rib.

In a still further solution, the concave portion is provided with a first surface and a second surface which are adjacent, and an included angle between the first surface and the second surface is between 110° and 140°.

In a still further solution, a curvature radius of an outer surface of the concave portion is 2.0 mm to 2.5 mm; and/or a curvature radius of an outer surface of the convex portion is between 2.5 mm and 3.0 mm; and/or a curvature radius of an inner surface of the convex portion is between 1.5 mm and 2.0 mm.

In a still further solution, on a cross section transverse to an extending direction of the reinforcing rib, a thickness of the concave portion is smaller than that of the reinforcing rib.

In a still further solution, the thickness of the concave portion is the distance from the end point of the convex portion closest to the upper surface of the environment-friendly tableware to the end point of the concave portion closest to the lower surface of the environment-friendly tableware.

In a still further solution, the thickness of the reinforcing rib is the distance from the end of the convex portion closest to the upper surface of the environment-friendly tableware to the first edge flap closest to the lower surface of the environment-friendly tableware.

In a still further solution, the reinforcing rib is wavy.

### Beneficial Effect

The invention provides the first edge flaps are arranged at the free ends of the two side walls of the handle, and when a user holds the handle, fingers are pressed against the two first edge flaps, so that force is applied to the side walls through the two edge flaps, the applied force is loaded on the side walls in the direction perpendicular to the side walls, and the situation that the side walls are loaded with oblique upward force is avoided, the direction of the loaded force is changed, and the situation that the stress distribution on the side walls is uneven is reduced. When the force applied to the two first edge flaps is removed, the two side walls can spring back, and the situation that the handle is damaged and will no longer be used is avoided.

In addition, since the thickness of first edge flaps is equal to the thickness of the side walls, on the one hand, the anti-squeeze ability of the handle is increased through thicker first edge flaps, on the other hand, when the environment-friendly tableware is molding, it is only necessary to keep the distance between the upper mold and the lower mold fixed. The molding process is simple, which is beneficial to the production of the environment-friendly tableware.

The corners of the first edge flaps are set to be rounded, namely edges are not arranged at the corners of the first edge flaps, so that the phenomenon that a user touches the edges of the first edge flaps to cause discomfort when holding the handle can be avoided, and the user can better apply force in opposite directions to avoid damage to the handle.

And when a user holds the handle, the applied forces are actually loaded oppositely from the same plane, the force applied on the two side walls are more uniform, and the handle is less prone to damage.

In addition, since the side walls and the first edge flaps are not perpendicular to each other, so that the open end of the cross section of the handle is relatively large. After the two side walls are slightly deformed by being squeezed, only the open end is slightly moved inwards, which does not lead to a fundamental change in the shape of the handle, and can improve the strength of the handle.

The invention improves the second edge flap on the main body can improve the strength of the main body, and prevent the main body from being deformed during use which would otherwise cause the environment-friendly tableware to be unusable.

When the environment-friendly tableware is fork, the second edge flap is provided on the periphery of each tooth, the strength of each tooth is increased through the second edge flap, so as to avoid tooth breakage during the use of the fork. In addition, the strength of the teeth is further increased through the reinforcing portion, and the situation of tooth breakage can be effectively avoided.

In addition, the strength of the handle and the main body can be increased through the reinforcing ribs, and particularly the strength of the joint of the handle and the main body is increased. Because the reinforcing rib includes a concave portion and convex portions, that is, the cross section of the reinforcing rib is wavy instead of being concave in a single direction, therefore the slope of the edge of the reinforcing rib will not change abruptly. During molding, the edge of the reinforcing rib is not prone to cracking, thereby greatly improving the yield of pulp molded tableware.

In addition, by arranging the proper included angle between the two surfaces of the concave portion, the stress of the reinforcing rib can be dispersed, and the bending resistance of the environment-friendly tableware is effectively improved.

In addition, by setting the curvature radiuses of the outer surface of the concave portion, the outer surface of the convex portion and the inner surface of the convex portion, it is possible to avoid cracking during the molding process due to the too small curvature radiuses of the concave portion and the convex portion, thereby improving the yield of the environment-friendly tableware.

In addition, the thickness of the concave portion in the invention is relatively small, which is beneficial to the packaging and transportation of the environment-friendly tableware, and avoids that the packaging and use of the environment-friendly tableware are affected by the excessive thickness of the concave portion of the reinforcing rib.

### Brief Description of Drawings

Fig. 1 is a structural view of a first embodiment of the present invention.
Fig. 2 is a front view of the first embodiment of the present invention.
Fig. 3 is a sectional view taken along line A-A in Fig. 2.
Fig. 4 is an enlarged sectional view taken along line B-B in Fig. 2.
Fig. 5 is an enlarged sectional view taken along line C-C in Fig. 2.
Fig. 6 is an enlarged cross-sectional view taken along line C-C in Fig. 2.
Fig. 7 is an enlarged view of area D in Fig. 3.
Fig. 8 is a structural view of a second embodiment of the present invention.
Fig. 9 is a front view of the second embodiment of the present invention.
Fig. 10 is a sectional view taken along line E-E of Fig. 9.
Fig. 11 is an enlarged sectional view taken along line F-F in Fig. 9.
Fig. 12 is an enlarged view of area G in Fig. 10.
Fig. 13 is an enlarged view of area H in Fig. 10.
Fig. 14 is a structural view of a third embodiment of the present invention.
Fig. 15 is a front view of the third embodiment of the present invention.
Fig. 16 is a sectional view taken along line I-I in Fig. 15.
Fig. 17 is an enlarged sectional view taken along line J-J in Fig. 15.
Fig. 18 is an enlarged view of area K in Fig. 16.
Fig. 19 is a structural view of a fourth embodiment of the present invention.
Fig. 20 is a front view of the fourth embodiment of the present invention.
Fig. 21 is an enlarged sectional view taken along line L-L in Fig. 20.
Fig. 22 is an enlarged sectional view taken along line M-M in Fig. 20.
Fig. 23 is a sectional view taken along line N-N in Fig. 20.
Fig. 24 is an enlarged view of area P in Fig. 23.
Fig. 25 is a sectional view of a spoon handle as a comparative example.

The present invention is further described with reference to the following figures and embodiments.

### Detailed Description of Invention

The environment-friendly tableware of the present invention is disposable tableware, and is formed by molding and hot-pressing environment-friendly and naturally degradable materials such as paper pulp and plant fiber. This environment-friendly tableware is environment-friendly and can be degraded in a natural environment, and the environment is not easily polluted even if the tableware is thrown away after being used.

The environment-friendly tableware of the present invention mainly comprises tableware such as a table knife, a spoon, a fork and the like, which are provided with handles and main bodies. Therefore, the present invention mainly aims at improving the handles and the main bodies to improve the bending resistance of the environment-friendly tableware.

### The first embodiment:

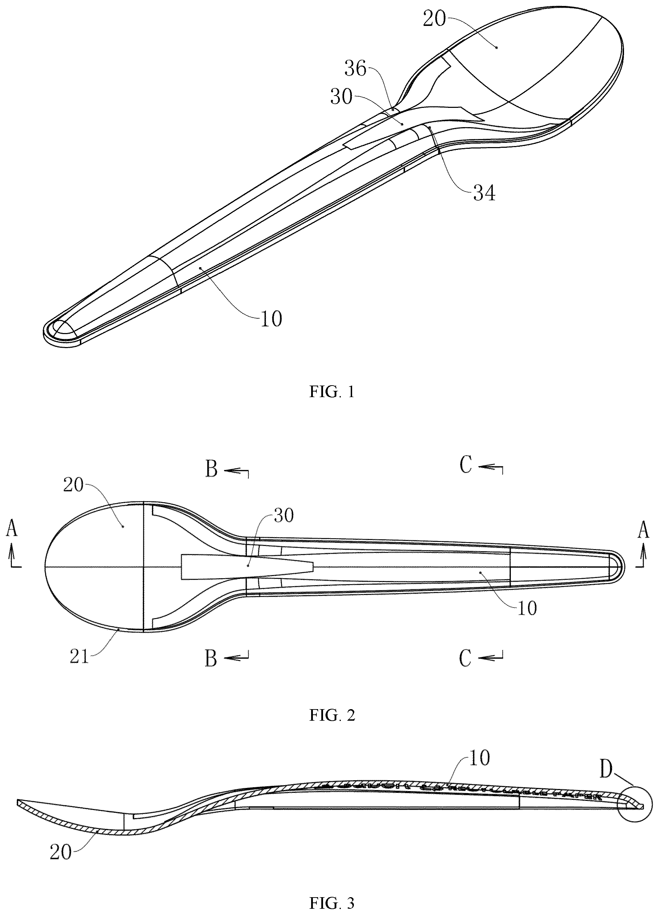

Referring to Fig. 1 to 3, the environment-friendly tableware of this embodiment is a pulp molded spoon with an elongated handle 10 and a main body 20, the main body 20 being provided at one end of the handle 10. When the spoon is in use, a user usually holds the handle 10 with fingers, and the main body 20 is used for containing food. When the spoon is used for containing food, the main body 20 usually touches hard objects such as plates and the like, so the connection part of the main body 20 and the handle 10 is most prone to bending. Once the main body 20 is bent relative to the handle 10, the spoon will no longer be able to be used. In order to strengthen the rigidity of the joint between the main body 20 and the handle 10, a reinforcing rib 30 is provided between the handle 10 and the main body 20 in this embodiment.

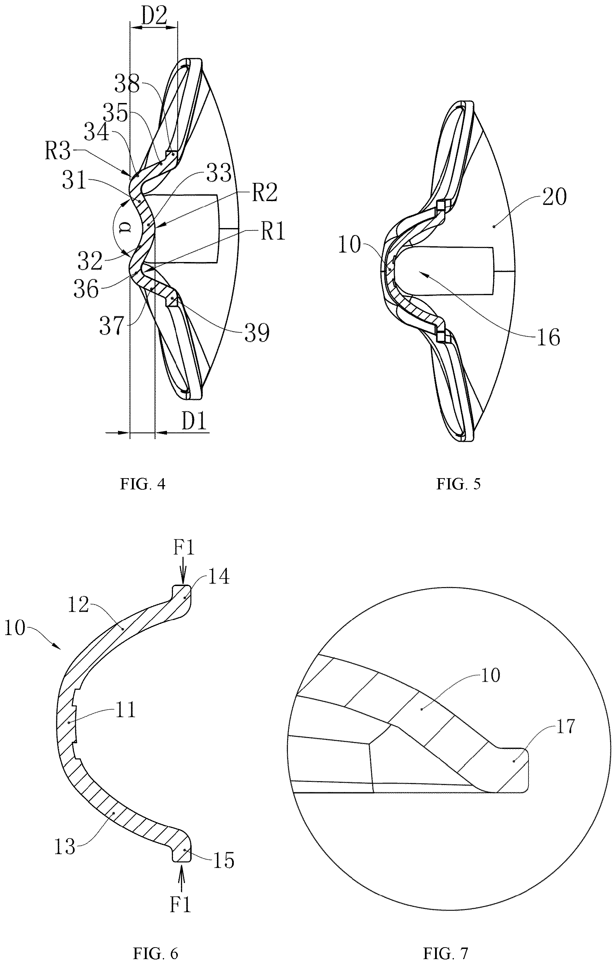

As can be seen from Fig. 1 and 2, the reinforcing rib 30 is substantially in the form of an elongated strip extending from the handle 10 to the main body 20. See Fig. 4, the reinforcing rib 30 is concave from the upper surface of the spoon towards the lower surface, and, in a cross-section taken in the direction of extension of the reinforcing rib 30, the reinforcing rib 30 comprises a recess 33 and convex portions 34, 36 at both ends of the concave portion 33.

The bottom wall of the concave portion 33 is not flat, and in this embodiment, the concave portion 33 has a first surface 31 and a second surface 32, and an included angle α formed between the first surface 31 and the second surface 32 is an obtuse angle. Preferably, the included angle α is between 110° and 140°, and more preferably, the included angle α is between 120° and 130°. In addition, a side wall 35 is connected to one end of the first surface 31, and the convex portion 34 is formed between the side wall 35 and the first surface 31; a side wall 37 is connected to one end of the second surface 32, and the convex portion 36 is formed between the side wall 37 and the second surface 32.

It can be seen from Fig. 1 and Fig. 2, the cross section of the reinforcing rib 30 is not concave in one direction, but concave and convex in two directions, i.e. the concave portion 33 is concave from the upper surface to the lower surface of the spoon, and the two convex portions 34, 36 are convex from the lower surface to the upper surface of the spoon, so that the cross section of the reinforcing rib 30 is wavy, and there is no abrupt change in the slope from a plane to an inclined plane at the concave portion 33 and the convex portions 34, 36, i.e. no edges are formed. In this way, cracks are not easily formed at the concave portion 33 and the convex portions 34, 36 during the molding process, and the yield of the pulp molding spoons is improved.

Preferably, the curvature radius R2 of the outer surface of the concave portion 33 is between 2.0 mm and 2.5 mm, and the outer surface of the concave portion 33 is the surface of the concave portion 33 close to the lower surface of the spoon; the curvature radius R3 of the outer surface of the convex portions 34, 36 is between 2.5 mm and 3.0 mm, wherein the outer surface of the convex portions 34, 36 is the surface of the convex portions 34, 36 close to the upper surface of the spoon; the curvature radius R1 of the inner surface of the convex portions 34, 36 is between 1.5 mm and 2.0 mm, wherein the inner surface of the convex portions 34, 36 is the surface of the convex portions 34, 36 close to the lower surface of the spoon.

By setting a reasonable curvature radius for the outer surface of the concave portion 33 and a reasonable curvature radius for the inner surface and the outer surface of the convex portion 34, it is possible to avoid the occurrence of cracks on the surfaces of the concave portion 33 or the convex portions 34, 36 during molding due to the curvature radius being designed to be too small.

An edge flap 38 is connected to the free end of the side wall 35 and an edge flap 39 is connected to the free end of the side wall 37. Preferably, the edge flaps 38, 39 have a thickness equal to the thickness of the side walls 35, 37. The provision of the edge flaps 38, 39 increases the bending strength of the reinforcing rib 30 and prevents the reinforcing rib 30 from being deformed by squeezing and bending.

Referring to Fig. 4, the thickness of the concave portion 33 is D1, i.e., the distance from the end point of the convex portion 34 closest to the upper surface of the spoon to the end point of the concave portion 33 closest to the lower surface of the spoon is D1. The thickness of the reinforcing rib 30 is D2, i.e., the distance from the end of the convex portion 34 closest to the upper surface of the spoon to the end point of the edge flap 38 closest to the lower surface of the spoon is D2. As can be seen from Fig. 4, the thickness D1 of the concave portion 33 is smaller than the thickness D2 of the reinforcing rib 30.

In order to improve the strength of the handle 10, in this embodiment, the handle 10 is designed to be a hollow shape with one side open. Referring to Fig. 5 and 6, in the extending direction of the handle 10, the cross section of the handle 10 includes a bottom wall 11 and side walls 12 and 13 at both ends of the bottom wall 11. One end of the side wall 12 is connected to the bottom wall 11, the other end of the side wall 12 is a free end, and a first edge flap 14 is provided at the free end of the side wall 12. Preferably, the side wall 12 and the bottom wall 11 have a curved transition, i.e., no edge is provided between the side wall 12 and the bottom wall 11. One end of the side wall 13 is connected to the bottom wall 11, the other end of the side wall 13 is a free end, and a first edge flap 15 is provided at the free end of the side wall 13. Preferably, the side wall 13 and the bottom wall 11 have a curved transition, i.e., no edge is provided between the side wall 13 and the bottom wall 11. Thus, the handle 10 forms a recess 16 on the side towards the lower surface of the spoon, and the free ends of the two side walls 12, 13 can move closer to each other under force.

It can be seen from Fig. 5 and Fig.6, the two opposite side walls 12, 13 are provided with first edge flaps 14, 15, respectively. Preferably, the two first edge flaps 14, 15 are located on the same surface, so that when the user grips the handle 10, the applied force F1 acts on the ends of the first edge flaps 14, 15, respectively, and the applied force F1 is directed towards each other. In this way, the side walls 12, 13 are forced towards the middle and deformed. When the applied force F1 is removed, the side walls 12 and 13 will spring back. Due to the low elasticity of the pulp and the like materials, the side walls 12 and 13 do not spring back much, but as long as the load on the first edge flaps 14 and 15 is not too large, the side walls 12 and 13 can still rebound within a certain range, thereby preventing the handle 10 from being severely deformed.

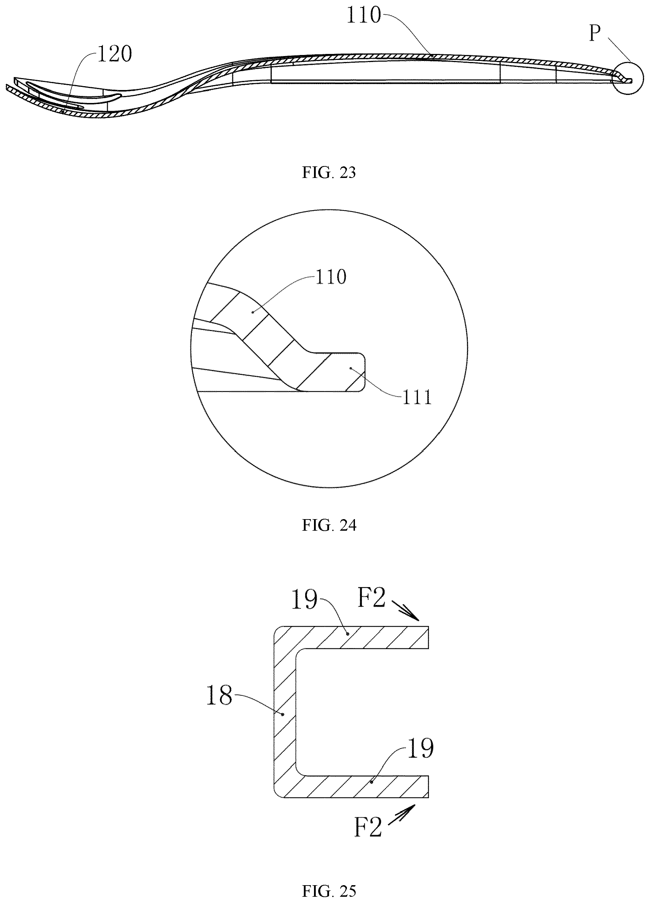

Assuming that the first edge flap is not provided on the spoon handle, as shown in Fig. 25, the spoon handle is provided with a bottom wall 18 and two side walls 19, and when the user holds the handle, the side walls 19 will be directly pressed. Because the position where the user presses the side walls 19 is not fixed, if the user presses the free ends of the side walls 19, the directions of the forces applied are not opposite, but inclined, which will cause uneven stress on the side walls 19, and easily cause severe deformation of the side walls 19. As a result, the two side walls 19 will lean inwards, and the use of the spoon is affected.

In this embodiment, the side wall 12 and the first edge flap 14 are not arranged vertically, but are inclined to each other, and the side wall 12 is substantially arc-shaped, and the angle between the side wall 12 and the first edge flap 14 is an obtuse angle. The side wall 13 and the first edge flap 15 are also inclined to each other, the side wall 13 are substantially arc-shaped, and the angle between the side wall 13 and the first edge flap 15 is also an obtuse angle.

Preferably, the thicknesses of the first edge flaps 14 and 15 are equal, and the thicknesses of the first edge flaps 14 and 15 are equal to the thicknesses of the side walls 12 and 13. In this way, on one hand, the thicknesses of the first edge flaps 14 and 15 are designed to be relatively large, the anti-squeeze capability of the first edge flaps 14 and 15 can be improved, and the first edge flaps 14 and 15 are prevented from being easily deformed by being squeezed due to too small thicknesses. On the other hand, the distance between the upper mold and the lower mold can be maintained uniform during the molding of the spoon. The spoon of this embodiment is molded by a compression molding machine. For this reason, when performing hot pressing, only the distance between the upper mold and the lower mold needs to be adjusted, which can ensure that the spoon is formed by compression molding that satisfies the thickness requirement. The structure of the upper mold and the lower mold is simple, which is beneficial to simplify the molding process of the spoon.

In addition to the first edge flaps 14, 15 provided on both side walls 12, 13 of the handle 10, a first edge flaps is also provided at the end of the handle 10. Referring to Fig. 7, the free end of the handle 10 is also provided with a first edge flap 17, and the thickness of the first edge flap 17 is equal to the thickness of the handle 10. Furthermore, the corners of the first edge flaps 14, 15, 17 are all rounded, i.e. no edges are provided. The user does not feel uncomfortable without pressing against the edge when holding the handle 10. It can be seen that the provision of a first edge flap around the periphery of the handle 10 can improve the overall bending resistance of the handle 10.

A second edge flap 21 is provided at the periphery of the main body 20 of the spoon. In this embodiment, the thickness of the second edge flap 21 is equal to the thickness of the main body 20, and the second edge flap 21 extends around the circumference of the main body 21. At the same time, the corners of the second edge flap 21 are also designed to be rounded. The purpose of providing the second edge flap 21 on the periphery of the main body 20 is to improve the bending strength of the main body 20 and prevent the main body 20 from being bent and deformed under force.

Preferably, the thickness of the entire spoon is equal, i.e., the thickness is equal for each part of the handle 10, the main body 20 and the reinforcing rib 30, which simplifies the production process of the spoon. Specifically, since the spoon is formed by pulp molding and hot pressing, the wet blank needs to be placed on the lower mold when the spoon is pressed by the press molding machine, and the thickness of the formed spoon is controlled by controlling the downward distance of the upper mold. Therefore, during hot press molding, the distance between the upper mold and the lower mold needs to be controlled, so that the spoon with uniform thickness can be obtained by pressing. The design of the upper mold and the lower mold is simple, and the control is not complicated. Preferably, the thickness of the spoon may be between 0.2 mm and 5.0 mm, preferably between 0.5 mm and 1.0 mm.

In addition, the cross section of the reinforcing rib 30 is designed into a wave shape in this embodiment, and the first edge flap is arranged on the periphery of the handle 10, and the second edge flap is arranged on the periphery of the main body 20, both of which can facilitate the stacking of spoons. In the production process, the stacking and positioning of a plurality of spoons can be conveniently realized, so as to facilitate the realization of automated production and also facilitate the transportation of spoons. Before the spoon is used, one spoon can be conveniently separated from a plurality of stacked spoons, which is convenient for taking the spoons.

### The second embodiment:

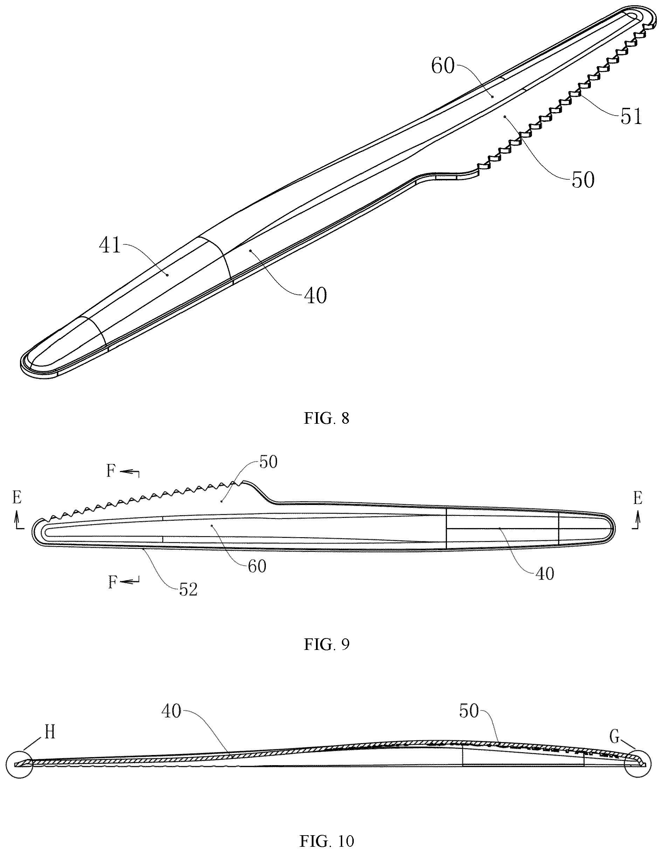

Referring to Fig. 8 to 10, the environment-friendly tableware of this embodiment is a table knife made of environment-friendly material. The table knife includes a handle 40 and a main body 50, wherein the handle 40 is elongated, and the main body 50 is located at one end of the handle 40. Since the connection between the main body 50 and the handle 40 is the most prone to bending, the present embodiment provides a reinforcing rib 60 between the handle 40 and the main body 50 in order to enhance the rigidity of the connection between the main body 50 and the handle 40.

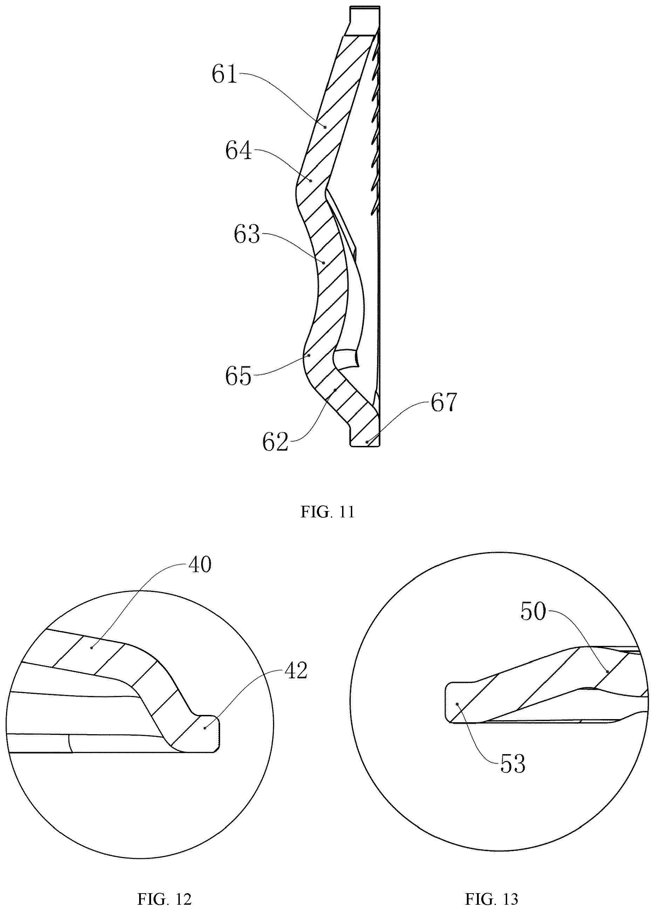

The reinforcing rib 60 is substantially elongated and extends from the handle 40 to the main body 50. Referring to Fig. 11, the reinforcing rib 60 is concave from the upper surface of the table knife toward the lower surface, and, in a cross section in the extending direction of the reinforcing rib 60, the reinforcing rib 60 includes a concave portion 63 and convex portions 64, 65 at both ends of the concave portion 63.

The bottom wall of the concave portion 63 is not flat, and in particular, the concave portion 63 has two adjacent surfaces, and the included angle formed between the two surfaces is an obtuse angle. Preferably, the included angle is between 110 ° and 140 °, more preferably between 120 ° and 130 °. In addition, both ends of the concave portion 33 are respectively provided with side walls 61 and 62, and a convex portion 64 is formed between the side wall 61 and the concave portion 33; a convex portion 65 is formed between the side wall 62 and the concave portion 63.

It can be seen from Fig.8 to Fig. 10, the cross section of the reinforcing rib 60 is not concave in one direction, but concave and convex in two directions, i.e. the concave portion 63 is concave from the upper surface to the lower surface of the table knife, and the two convex portions 64 and 65 are convex from the lower surface to the upper surface of the table knife, so that the cross section of the reinforcing rib 60 is wavy, and there is no abrupt change in the slope from a plane to an inclined plane at the concave portion 63 and the convex portions 64, 65, i.e. no edges are formed. In this way, cracks are not easily formed at the concave portion 63 and the convex portions 64, 65 during the molding process, and the yield of the pulp molding table knives is improved.

In addition, by properly setting the curvature radiuses of the inner surface and the outer surface of the concave portion 63 and the convex portions 64 and 65, cracks on the surfaces of the concave portion 63 or the convex portions 64 and 65 during molding due to the condition that the curvature radiuses of the inner surface and the outer surface of the concave portion 63 and the convex portions 64 and 65 is too small can be avoided. In addition, the thickness of the concave portion 63 is less than the total thickness of the reinforcing rib 60.

An edge flap 67 is connected to the free end of the side wall 62, and the edge flap 67 has a thickness equal to the thickness of the side wall 62. The provision of the edge flap 67 increases the bending strength of the reinforcing rib 60 and prevents the reinforcing rib 60 from being deformed by squeezing and bending.

In order to improve the strength of the handle 40, in this embodiment, the handle 40 is designed to be a hollow shape with one side open, that is, in the extending direction of the handle 40, the cross section of the handle 40 includes a bottom wall and side walls at both ends of the bottom wall. One end of the side wall is connected with the bottom wall, the other end of the side wall is a free end, and a first edge flap is provided at the free end of the side wall. And the first edge flaps on both side walls are located on the same surface, so that when a user grips the handle 40, the forces applied to the ends of the first edge flaps, respectively, are drawn together towards the middle and deformed after the two side walls are forced. When the applied forces are removed, the two side walls will spring back. In addition, the thicknesses of the two first edge flaps are equal, and the thickness of the first edge flap is equal to that of the side wall. The cross-sectional shape of the handle 40 of this embodiment is substantially the same as the cross-sectional shape of the handle of the first embodiment, and will not be described again.

Referring to Fig. 12, a first edge flap 42 is also provided at the free end of the handle 40, and the first edge flap 42 has a thickness equal to the thickness of the handle 40. It can be seen that the periphery of the handle 40 is provided with a first edge flap, and the corners of the first edge flap are all rounded, i.e. no edges are provided. The user does not feel uncomfortable without pressing against the edges when gripping the handle 40.

Further, a plurality of teeth 51 are provided on one side of the main body 50 of the table knife, and a second edge flap 52 is provided on the other side of the main body 50. Referring to Fig. 13, a second edge flap 53 is provided at the end of the main body 50. Preferably, the thickness of the second edge flaps 52, 53 is equal to the thickness of the main body 50, and the corners of the second edge flaps 52, 53 are also designed to be rounded. The purpose of providing the second edge flaps 52 and 53 on the main body 50 is to improve the bending strength of the main body 50 and to prevent the main body 50 from bending and deforming under force.

In this embodiment, the cross section of the reinforcing rib 60 is designed into a wave shape, and the first edge flap is arranged on the periphery of the handle 40, and the second edge flap is arranged on the main body 50, both of which can facilitate the stacking of the table knives. In the production process, the stacking and the positioning of a plurality of table knives can be conveniently realized, so as to facilitate the realization of automated production and also facilitate the transportation of the table knives. Before the table knife is used, one table knife can be conveniently separated from a plurality of stacked table knives, which is convenient for taking the table knife.

### The third embodiment:

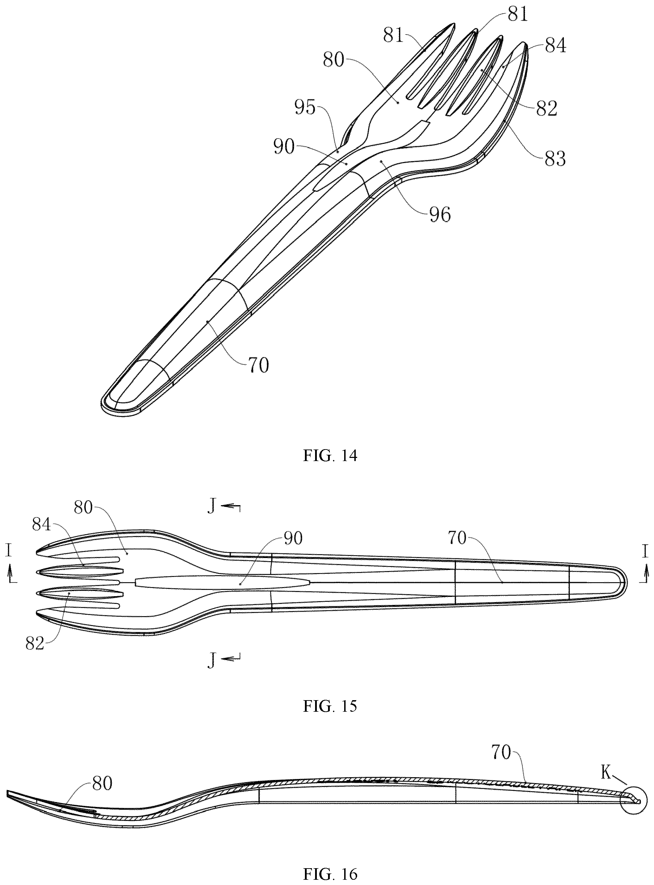

Referring to Fig. 14 to 16, the environment-friendly tableware of this embodiment is a fork made of an environment-friendly material. The fork includes a handle 70 and a main body 80, wherein the handle 70 is elongated, and the main body 80 is located at one end of the handle 70. Since the connection between the main body 80 and the handle 70 is the most prone to bending, the present embodiment provides a reinforcing rib 90 between the handle 70 and the main body 80 in order to enhance the rigidity of the connection between the main body 80 and the handle 70.

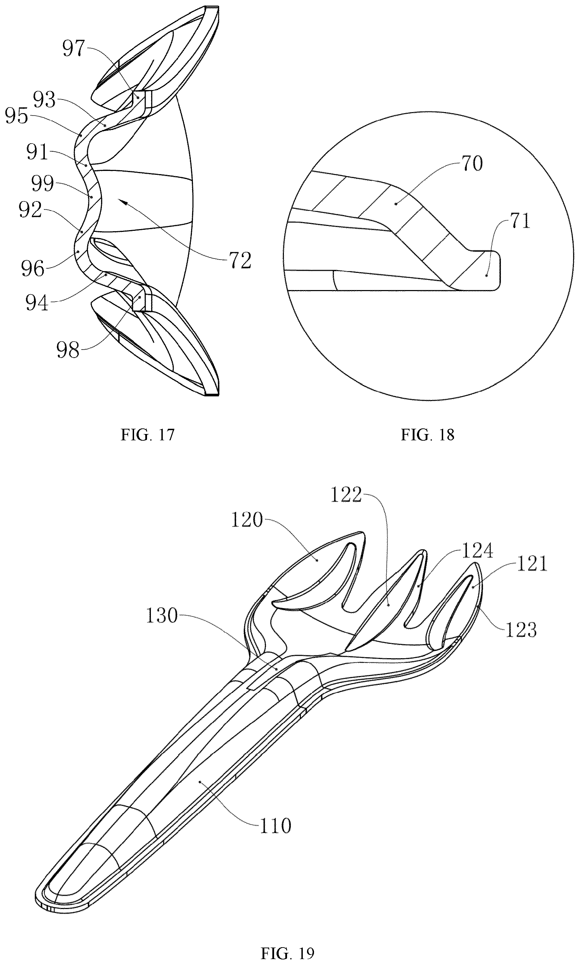

The reinforcing rib 90 is substantially elongated and extends from the handle 70 to the main body 80. Referring to Fig. 17, the reinforcing rib 90 is concave from the upper surface of the fork toward the lower surface, and, in a cross section in the extending direction of the reinforcing rib 90, the reinforcing rib 90 includes a concave portion 99 and convex portions 95, 96 at both ends of the concave portion 99.

The bottom wall of the concave portion 99 is not flat, and specifically, the concave portion 99 has a first surface 91 and a second surface 92 adjacent to each other, and the included angle formed between the first surface 91 and the second surface 92 is an obtuse angle. Preferably, the included angle is between 110 ° and 140 °, and more preferably, the included angle is between 120 ° and 130 °. In addition, a side wall 93 is connected to one end of the first surface 91, a side wall 94 is connected to one end of the second surface 92, a convex portion 95 is formed between the first surface 91 and the side wall 93, and a convex portion 96 is formed between the second surface 92 and the side wall 94.

It can be seen from Fig. 14 to Fig. 16, the cross section of the reinforcing rib 90 is not concave in one direction, but concave and convex in two directions, i.e. the concave portion 99 is concave from the upper surface to the lower surface of the fork, and the two convex portions 95, 96 are convex from the lower surface to the upper surface of the fork, so that the cross section of the reinforcing rib 90 is wavy, and there is no abrupt change in the slope from a plane to an inclined plane at the concave portion 99 and the convex portions 95, 96, i.e. no edges are formed. In this way, cracks are not easily formed at the concave portion 99 and the convex portions 95, 96 during the molding process, and the yield of the pulp molding forks is improved.

In addition, by properly setting the curvature radiuses of the inner and outer surfaces of the concave portion 99 and the convex portions 95 and 96, it is possible to prevent the occurrence of cracks on the surfaces of the concave portion 99 or the convex portions 95 and 96 during molding due to the excessively small curvature radiuses of the inner and outer surfaces of the concave portion 99 and the convex portions 95 and 96. In addition, the thickness of the concave portion 99 is less than the total thickness of the reinforcing rib 90.

An edge flap 97 is connected to the free end of the side wall 93, and the edge flap 97 has a thickness equal to the thickness of the side wall 92; an edge flap 98 is connected to the free end of the side wall 94, and the edge flap 98 has a thickness equal to the thickness of the side wall 94. The provision of the edge flaps 97, 98 increases the bending strength of the reinforcing rib 90 and prevents the reinforcing rib 90 from being deformed by squeezing and bending.

In order to improve the strength of the handle 70, in this embodiment, the handle 70 is designed to be a hollow shape with one side open, that is, in the extending direction of the handle 70, the cross section of the handle 70 includes a bottom wall and side walls at both ends of the bottom wall. One end of the side wall is connected with the bottom wall, the other end of the side wall is a free end, and a first edge flap is provided at the free end of the side wall. And, the first edge flaps on both side walls are located on the same surface, so that when a user grips the handle 70, the forces applied to the ends of the first edge flaps, respectively, are drawn together toward the middle and deformed after the two side walls are forced. When the applied forces are removed, the two side walls will spring back. In addition, the thicknesses of the two first edge flaps are equal, and the thickness of the first edge flap is equal to that of the side wall. The cross-sectional shape of the handle 70 of this embodiment is substantially the same as the cross-sectional shape of the handle of the first embodiment, and will not be described again.

Referring to Fig. 18, a first edge flap 71 is also provided at the free end of the handle 70, and the first edge flap 71 has a thickness equal to the thickness of the handle 70. It can be seen that the first edge flap is disposed around the periphery of the handle 70, and the corners of the first edge flap are all rounded, i.e. no edges are provided. The user does not feel uncomfortable without pressing against the edges when gripping the handle 70.

Furthermore, a second edge flap 83 is provided on the periphery of the main body 80 of the fork, and four teeth 81 are provided on the main body 80 of the fork, and a second edge flap 84 is provided on the periphery of each tooth 81. The thickness of the second edge flaps 83, 84 is equal to that of the main body 80, and the corners of the second edge flaps 83, 84 are designed to be rounded. It can be seen that the second edge flap is provided on the periphery of the main body 80. The purpose of providing the second edge flaps 83 and 84 on the main body 80 is to improve the bending strength of the main body 80 and to prevent the main body 80 from being bent and deformed under force.

In addition, concave reinforcing portions 82 are provided at the middle of the two teeth 81 in the middle, and the reinforcing portions 82 are concave from the upper surface to the lower surface of the fork. The reinforcing portions 82 can improve the bending resistance of the teeth 81 and avoid the teeth 81 from breaking during the use of the fork.

In this embodiment, the cross section of the reinforcing rib 90 is designed into a wave shape, and the first edge flap is arranged on the periphery of the handle 70, and the second edge flap is arranged on the periphery of the main body 80, both of which can facilitate the stacking of the forks. In the production process, the stacking and positioning of a plurality of forks can be conveniently realized, so as to facilitate the realization of automated production and also facilitate the transportation of the forks. Before the fork is used, one fork can be conveniently separated from a plurality of stacked forks, which is convenient for taking the fork.

### The fourth embodiment:

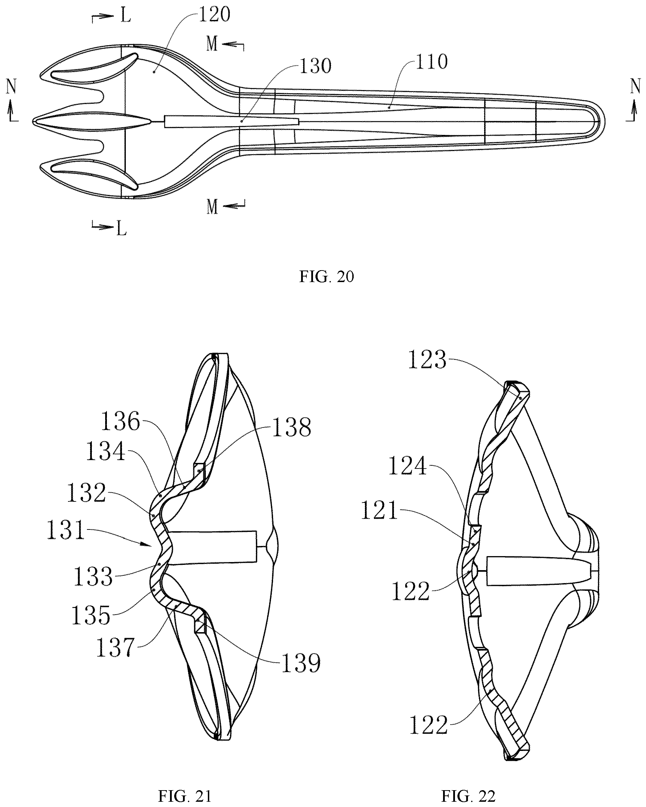

Referring to Fig. 19 and 20, the environment-friendly tableware of this embodiment is a fork made of environment-friendly material, which is different from the third embodiment in that the fork of this embodiment is provided with three teeth. The fork includes a handle 110 and a main body 120, wherein the handle 110 is elongated, and the main body 120 is located at one end of the handle 110. Since the connection between the main body 120 and the handle 110 is the most prone to bending, the present embodiment provides a reinforcing rib 130 between the handle 10 and the main body 120 in order to enhance the rigidity of the connection between the main body 120 and the handle 110.

The reinforcing rib 130 is substantially elongated and extends from the handle 110 to the main body 120. Referring to Fig. 21, the reinforcing rib 130 is concave from the upper surface toward the lower surface of the fork, and in a cross section in the extending direction of the reinforcing rib 130, the reinforcing rib 130 includes a concave portion 131 and convex portions 134 and 135 at both ends of the concave portion 131.

The bottom wall of the concave portion 131 is not flat, and specifically, the concave portion 131 has a first surface 132 and a second surface 133 adjacent to each other, and the included angle formed between the first surface 132 and the second surface 133 is an obtuse angle. Preferably, the included angle is between 110 ° and 140 °, and more preferably, the included angle is between 120 ° and 130 °. In addition, a side wall 136 is connected to one end of the first surface 132, a side wall 137 is connected to one end of the second surface 133, a convex portion 134 is formed between the first surface 132 and the side wall 136, and a convex portion 135 is formed between the second surface 133 and the side wall 137.

It can be seen from Fig. 19 and Fig.20, the cross section of the reinforcing rib 130 is not concave in one direction, but concave and convex in two directions, that is, the concave portion 131 is concave from the upper surface to the lower surface of the fork, and the two convex portions 132, 135 are convex from the lower surface to the upper surface of the fork, so that the cross section of the reinforcing rib 130 is wavy, and there is no abrupt change in the slope from a plane to an inclined plane at the concave portion 131 and the convex portions 132, 135, that is, no edges are formed. In this way, cracks are not easily formed at the concave portion 131 and the convex portions 132, 135 during the molding process, and the yield of the pulp molding forks is improved.

In addition, by properly setting the curvature radiuses of the inner and outer surfaces of the concave portion 131 and the convex portions 132 and 135, it is possible to prevent the occurrence of cracks on the surfaces of the concave portion 131 or the convex portions 132 and 135 during molding due to the excessively small curvature radiuses of the inner and outer surfaces of the concave portion 131 and the convex portions 132 and 135. In addition, the thickness of the concave portion 131 is less than the total thickness of the reinforcing rib 130.

An edge flap 138 is connected to the free end of the side wall 136, and the edge flap 138 has a thickness equal to the thickness of the side wall 136; an edge flap 139 is connected to the free end of the side wall 137, and the edge flap 139 has a thickness equal to the thickness of the side wall 137. The provision of the edge flaps 138, 139 increases the bending strength of the reinforcing rib 130 and prevents the reinforcing rib 130 from being deformed by squeezing and bending.

In order to improve the strength of the handle 110, in this embodiment, the handle 110 is designed to be a hollow shape with one side open, that is, in the extending direction of the handle 110, the cross section of the handle 110 includes a bottom wall and side walls at both ends of the bottom wall. One end of the side wall is connected with the bottom wall, the other end of the side wall is a free end, and a first edge flap is provided at the free end of the side wall. And, the first edge flaps on both side walls are located on the same surface, so that when a user grips the handle 110, the forces applied to the ends of the first edge flaps, respectively, are drawn together toward the middle and deformed after the two side walls are forced. When the applied forces are removed, the two side walls will spring back. In addition, the thicknesses of the two first edge flaps are equal, and the thickness of the first edge flap is equal to that of the side wall. The cross-sectional shape of the handle 110 of this embodiment is substantially the same as the cross-sectional shape of the handle of the first embodiment, and will not be described again.

Referring to Fig. 23 and 24, a first edge flap 111 is also provided at the free end of the handle 110, and the first edge flap 111 has a thickness equal to the thickness of the handle 110. It can be seen that the first edge flap is disposed around the periphery of the handle 110, and the corners of the first edge flap are all rounded, i.e. no edges are provided. The user does not feel uncomfortable without pressing against the edges when gripping the handle 110.

Referring to Fig. 19 and 22, a second edge flap 123 is provided on the periphery of the main body 120 of the fork, and three teeth 121 are provided on the main body 120 of the fork, and a second edge flap 124 is provided on the periphery of each tooth 121. The thickness of the second edge flaps 123, 124 is equal to that of the main body 120, and the corners of the second edge flaps 123, 124 are designed to be rounded. It can be seen that the second edge flap is provided on the periphery of the main body 120. The purpose of providing the second edge flaps 123 and 124 on the main body 120 is to improve the bending strength of the main body 120 and to prevent the main body 120 from being bent and deformed under force.

In addition, concave reinforcing portions 122 are provided at the middle of the three teeth 121, and the reinforcing portions 122 are concave from the upper surface to the lower surface of the fork. The reinforcing portions 122 can improve the bending resistance of the teeth 121 and avoid the teeth 121 from breaking during the use of the fork.

In this embodiment, the cross section of the reinforcing rib 130 is designed into a wave shape, and the first edge flap is arranged on the periphery of the handle 110, and the second edge flap is arranged on the periphery of the main body 120, both of which can facilitate the stacking of the forks. In the production process, the stacking and positioning of a plurality of forks can be conveniently realized, so as to facilitate the realization of automated production and also facilitate the transportation of the forks. Before the fork is used, one fork can be conveniently separated from a plurality of stacked forks, which is convenient for taking the fork.

Finally, it should be emphasized that the present invention is not limited to the above embodiments, such as variations in the length and width of the handles of the table knife, fork and spoon; or changes in the number of teeth of the main body of the fork; or changes in the thickness of the table knife, fork, spoon, etc., which are intended to be included within the scope of the claimed invention.

### Industrial Applicability

The environment-friendly tableware provided by the invention can be a knife, a fork, a spoon or a fork spoon, which are made of environment-friendly materials and is environmentally friendly. In addition, the invention provides the first edge flaps are arranged at the free ends of the two side walls of the handle, and when a user holds the handle, fingers are pressed against the two first edge flaps, so that force is applied to the side walls through the two edge flaps, the applied force is loaded on the side walls in the direction perpendicular to the side walls, and the situation that the side walls are loaded with oblique upward force is avoided, the direction of the loaded force is changed, and the situation that the stress distribution on the side walls is uneven is reduced. And the environment-friendly tableware of the invention has good bending resistance and is not easy to break when used.

## Claims

1. An environment-friendly disposable tableware which is formed by molding and hot-pressing environment-friendly and naturally degradable materials, comprising:
a handle (10, 40, 70, 110) and a main body (20, 50, 80, 120), wherein the main body (20, 50, 80, 120) is positioned at one end of the handle (10, 40, 70, 110);
on a cross section transverse to an extending direction of the handle (10, 40, 70, 110), the handle (10, 40, 70, 110) has a bottom wall (11) and side walls (12, 13) located at both ends of the bottom wall, a first edge flap (14, 15) is arranged at a free end of each side wall (12, 13), a thickness of the first edge flap (14, 15) is equal to a thickness of each side wall (12, 13), and corners of the first edge flap (14, 15) are rounded;
whereby the environment-friendly tableware is provided with a reinforcing rib (30,60,90,130), the reinforcing rib (30,60,90,130) extends from the handle 10,40,70,110 to the main body (20,50,80,120), **characterized in that**
the reinforcing rib (30,60,90,130) comprises a concave portion (33,63,99,131) and convex portions (34,36,64,65,95,96,134,135) positioned at both ends of the concave portion (33,63,99,131) on a cross section transverse to an extending direction of the reinforcing rib (30,60,90,130).

2. The environment-friendly tableware according to claim 1, wherein:
the first edge flaps (14, 15) corresponding to the side walls (12, 13) respectively are on the same plane.

3. The environment-friendly tableware according to claim 2, wherein:
each of the side wall (12, 13) is inclined to corresponding first edge flap (14, 15), and an angle between each of the side walls (12, 13) and the corresponding first edge flap (14, 15) is an obtuse angle.

4. The environment-friendly tableware according to any one of claims 1 to 3, wherein:
a periphery of the main body (20, 50, 80, 120) is provided with a second edge flap (21, 52, 83, 123), and a thickness of the second edge flap (21, 52, 83, 123) is equal to a thickness of the main body (20, 50, 80, 120).

5. The environment-friendly tableware according to claim 4, wherein:
the environment-friendly tableware is a fork, the main body (80, 120) is provided with at least two teeth (81, 121), and a periphery of each tooth (81, 121) is provided with the second edge flap (84, 124).

6. The environment-friendly tableware according to claim 5, wherein:
a concave reinforcing portion (82, 122) is provided in the middle of at least one of the teeth (80, 120).

7. The environment-friendly tableware according to any one of the preceding claims, wherein:
the concave portion (33, 63, 99, 131) is provided with a first surface (31, 91, 131) and a second surface (32, 92, 132) which are adjacent, and an included angle between the first surface (31, 91, 131) and the second surface is between 110 ° and 140 °.

8. The environment-friendly tableware according to any one of the preceding claims, wherein:
a curvature radius of an outer surface of the concave portion (33, 63, 99, 131) is 2.0 mm to 2.5 mm.

9. The environment-friendly tableware according to any one of the preceding claims, wherein:
a curvature radius of an outer surface of the convex portion (34, 36, 64, 65, 95, 96, 134, 135) is between 2.5 mm and 3.0 mm.

10. The environment-friendly tableware according to any one of the preceding claims, wherein:
a curvature radius of an inner surface of the convex portion (34, 36, 64, 65, 95, 96, 134, 135) is between 1.5 mm and 2.0 mm.

11. The environment-friendly tableware according to any one of the preceding claims, wherein:
on a cross section transverse to an extending direction of the reinforcing rib (30, 60, 90, 130), a thickness of the concave portion (33, 63, 99, 131) is smaller than a thickness of the reinforcing rib (30, 60, 90, 130).

12. The environment-friendly tableware according to claim 11, wherein:
the thickness of the concave portion (33,63,99,131) is the distance from the end point of the convex portion (34, 36, 64, 65, 95, 96, 134, 135) closest to the upper surface of the environment-friendly tableware to the end point of the concave portion (33, 63, 99, 131) closest to the lower surface of the environment-friendly tableware.

13. The environment-friendly tableware according to claim 11, wherein:
the thickness of the reinforcing rib (30, 60, 90, 130) is the distance from the end of the convex portion (34, 36, 64, 65, 95, 96, 134, 135) closest to the upper surface of the environment-friendly tableware to the first edge flap closest to the lower surface of the environment-friendly tableware.

14. The environment-friendly tableware according to any one of the preceding claims, wherein:
the reinforcing rib (30,60,90,130) is wavy.

## Patentansprüche

1. Ein umweltfreundliches Einweggeschirr, das durch Formen und Heißpressen von umweltfreundlichen und natürlich abbaubaren Materialien gebildet wird, beinhaltend:
einen Griff (10, 40, 70, 110) und einen Hauptkörper (20, 50, 80, 120), wobei der Hauptkörper (20, 50, 80, 120) an einem Ende des Griffs (10, 40, 70, 110) positioniert ist;
wobei in einem Querschnitt quer zu einer Erstreckungsrichtung des Griffs (10, 40, 70, 110) der Griff (10, 40, 70, 110) eine untere Wand (11) und Seitenwände (12, 13), die sich an beiden Enden der unteren Wand befinden, aufweist, eine erste Randzunge (14, 15) an einem freien Ende jeder Seitenwand (12, 13) angeordnet ist, eine Dicke der ersten Randzunge (14, 15) gleich einer Dicke jeder Seitenwand (12, 13) ist und Ecken der ersten Randzunge (14, 15) abgerundet sind;
wobei
das umweltfreundliche Geschirr mit einer Verstärkungsrippe (30, 60, 90, 130) versehen ist, sich die Verstärkungsrippe (30, 60, 90, 130) von dem Griff (10, 40, 70, 110) zu dem Hauptkörper (20, 50, 80, 120) erstreckt, **dadurch gekennzeichnet, dass** in einem Querschnitt quer zu einer Erstreckungsrichtung der Verstärkungsrippe (30, 60, 90, 130) die Verstärkungsrippe (30, 60, 90, 130) einen konkaven Abschnitt (33, 63, 99, 131) und konvexe Abschnitte (34, 36, 64, 65, 95, 96, 134, 135), die an beiden Enden des konkaven Abschnitts (33, 63, 99, 131) positioniert sind, beinhaltet.

2. Umweltfreundliches Geschirr gemäß Anspruch 1, wobei:
die ersten Randzungen (14, 15), die jeweils den Seitenwänden (12, 13) entsprechen, auf derselben Ebene liegen.

3. Umweltfreundliches Geschirr gemäß Anspruch 2, wobei:
jede der Seitenwand (12, 13) zu der entsprechenden ersten Randzunge (14, 15) geneigt ist und ein Winkel zwischen jeder der Seitenwände (12, 13) und der entsprechenden ersten Randzunge (14, 15) ein stumpfer Winkel ist.

4. Umweltfreundliches Geschirr gemäß einem der Ansprüche 1 bis 3, wobei:
ein Umfang des Hauptkörpers (20, 50, 80, 120) mit einer zweiten Randzunge (21, 52, 83, 123) versehen ist und eine Dicke der zweiten Randzunge (21, 52, 83, 123) gleich einer Dicke des Hauptkörpers (20, 50, 80, 120) ist.

5. Umweltfreundliches Geschirr gemäß Anspruch 4, wobei:
das umweltfreundliche Geschirr eine Gabel ist, der Hauptkörper (80, 120) mit mindestens zwei Zinken (81, 121) versehen ist und ein Umfang jeder Zinke (81, 121) mit der zweiten Randzunge (84, 124) versehen ist.

6. Umweltfreundliches Geschirr gemäß Anspruch 5, wobei:
ein konkaver Verstärkungsabschnitt (82, 122) in der Mitte mindestens einer der Zinken (80, 120) bereitgestellt ist.

7. Umweltfreundliches Geschirr gemäß einem der vorhergehenden Ansprüche, wobei:
der konkave Abschnitt (33, 63, 99, 131) mit einer ersten Oberfläche (31, 91, 131) und einer zweiten Oberfläche (32, 92, 132), die benachbart sind, versehen ist und ein eingeschlossener Winkel zwischen der ersten Oberfläche (31, 91, 131) und der zweiten Oberfläche zwischen 110° und 140° beträgt.

8. Umweltfreundliches Geschirr gemäß einem der vorhergehenden Ansprüche, wobei:
ein Krümmungsradius einer äußeren Oberfläche des konkaven Abschnitts (33, 63, 99, 131) 2,0 mm bis 2,5 mm beträgt.

9. Umweltfreundliches Geschirr gemäß einem der vorhergehenden Ansprüche, wobei:
ein Krümmungsradius einer äußeren Oberfläche des konvexen Abschnitts (34, 36, 64, 65, 95, 96, 134, 135) zwischen 2,5 mm und 3,0 mm beträgt.

10. Umweltfreundliches Geschirr gemäß einem der vorhergehenden Ansprüche, wobei:
ein Krümmungsradius einer inneren Oberfläche des konvexen Abschnitts (34, 36, 64, 65, 95, 96, 134, 135) zwischen 1,5 mm und 2,0 mm beträgt.

11. Umweltfreundliches Geschirr gemäß einem der vorhergehenden Ansprüche, wobei:
in einem Querschnitt quer zu einer Erstreckungsrichtung der Verstärkungsrippe (30, 60, 90, 130) eine Dicke des konkaven Abschnitts (33, 63, 99, 131) geringer ist als eine Dicke der Verstärkungsrippe (30, 60, 90, 130).

12. Umweltfreundliches Geschirr gemäß Anspruch 11, wobei:
die Dicke des konkaven Abschnitts (33, 63, 99, 131) die Entfernung von dem Endpunkt des konvexen Abschnitts (34, 36, 64, 65, 95, 96, 134, 135), der der oberen Oberfläche des umweltfreundlichen Geschirrs am nächsten ist, bis zu dem Endpunkt des konkaven Abschnitts (33, 63, 99, 131), der der niedrigeren Oberfläche des umweltfreundlichen Geschirrs am nächsten ist, ist.

13. Umweltfreundliches Geschirr gemäß Anspruch 11, wobei:
die Dicke der Verstärkungsrippe (30, 60, 90, 130) die Entfernung von dem Endpunkt des konvexen Abschnitts (34, 36, 64, 65, 95, 96, 134, 135), der der oberen Oberfläche des umweltfreundlichen Geschirrs am nächsten ist, bis zu der ersten Randzunge, die der niedrigeren Oberfläche des umweltfreundlichen Geschirrs am nächsten ist, ist.

14. Umweltfreundliches Geschirr gemäß einem der vorhergehenden Ansprüche, wobei:
die Verstärkungsrippe (30, 60, 90, 130) gewellt ist.

## Revendications

1. De la vaisselle jetable écologique qui est formée par moulage et pressage à chaud de matériaux écologiques et naturellement dégradables, comprenant :
une poignée (10, 40, 70, 110) et un corps principal (20, 50, 80, 120), le corps principal (20, 50, 80, 120) étant positionné au niveau d'une extrémité de la poignée (10, 40, 70, 110) ;
sur une section transversale en travers d'une direction d'extension de la poignée (10, 40, 70, 110), la poignée (10, 40, 70, 110) a une paroi de dessous (11) et des parois latérales (12, 13) situées au niveaux des deux extrémités de la paroi de dessous, un premier rabat de bord (14, 15) est agencé au niveau d'une extrémité libre de chaque paroi latérale (12, 13), une épaisseur du premier rabat de bord (14, 15) est égale à une épaisseur de chaque paroi latérale (12, 13), et des coins du premier rabat de bord (14, 15) sont arrondis ;
moyennant quoi
la vaisselle écologique est pourvue d'une nervure de renforcement (30, 60, 90, 130), la nervure de renforcement (30, 60, 90, 130) s'étend de la poignée (10, 40, 70, 110) au corps principal (20, 50, 80, 120), **caractérisée en ce que** la nervure de renforcement (30, 60, 90, 130) comprend une portion concave (33, 63, 99, 131) et des portions convexes (34, 36, 64, 65, 95, 96, 134, 135) positionnées au niveau des deux extrémités de la portion concave (33, 63, 99, 131) sur une coupe transversale en travers d'une direction d'extension de la nervure de renforcement (30, 60, 90, 130).

2. La vaisselle écologique selon la revendication 1, dans laquelle :
les premiers rabats de bord (14, 15) correspondant aux parois latérales (12, 13) respectivement sont sur le même plan.

3. La vaisselle écologique selon la revendication 2, dans laquelle :
chacune des parois latérales (12, 13) est inclinée vers un premier rabat de bord (14, 15) correspondant, et un angle entre chacune des parois latérales (12, 13) et le premier rabat de bord (14, 15) correspondant est un angle obtus.

4. La vaisselle écologique selon n'importe laquelle des revendications 1 à 3, dans laquelle :
une périphérie du corps principal (20, 50, 80, 120) est pourvue d'un deuxième rabat de bord (21, 52, 83, 123), et une épaisseur du deuxième rabat de bord (21, 52, 83, 123) est égale à une épaisseur du corps principal (20, 50, 80, 120).

5. La vaisselle écologique selon la revendication 4 :
la vaisselle écologique étant une fourchette, le corps principal (80, 120) étant pourvu d'au moins deux dents (81, 121), et une périphérie de chaque dent (81, 121) est pourvue du deuxième rabat de bord (84, 124).

6. La vaisselle écologique selon la revendication 5, dans laquelle :
une portion de renforcement concave (82, 122) est prévue au milieu d'au moins une des dents (80, 120).

7. La vaisselle écologique selon n'importe laquelle des revendications précédentes, dans laquelle :
la portion concave (33, 63, 99, 131) est pourvue d'une première surface (31, 91, 131) et d'une deuxième surface (32, 92, 132) qui sont adjacentes, et un angle inclus entre la première surface (31, 91, 131) et la deuxième surface est compris entre 110° et 140°.

8. La vaisselle écologique selon n'importe laquelle des revendications précédentes, dans laquelle :
un rayon de courbure d'une surface externe de la portion concave (33, 63, 99, 131) est de 2,0 mm à 2,5 mm.

9. La vaisselle écologique selon n'importe laquelle des revendications précédentes, dans laquelle :
un rayon de courbure d'une surface externe de la portion convexe (34, 36, 64, 65, 95, 96, 134, 135) est compris entre 2,5 mm et 3,0 mm.

10. La vaisselle écologique selon n'importe laquelle des revendications précédentes, dans laquelle :
un rayon de courbure d'une surface interne de la portion convexe (34, 36, 64, 65, 95, 96, 134, 135) est compris entre 1,5 mm et 2,0 mm.

11. La vaisselle écologique selon n'importe laquelle des revendications précédentes, dans laquelle :
sur une coupe transversale en travers d'une direction d'extension de la nervure de renforcement (30, 60, 90, 130), une épaisseur de la portion concave (33, 63, 99, 131) est plus petite qu'une épaisseur de la nervure de renforcement (30, 60, 90, 130).

12. La vaisselle écologique selon la revendication 11, dans laquelle :
l'épaisseur de la portion concave (33, 63, 99, 131) est la distance à partir du point d'extrémité de la portion convexe (34, 36, 64, 65, 95, 96, 134, 135) le plus près de la surface supérieure de la vaisselle écologique jusqu'au point d'extrémité de la portion concave (33, 63, 99, 131) le plus près de la surface inférieure de la vaisselle écologique.

13. La vaisselle écologique selon la revendication 11, dans laquelle :
l'épaisseur de la nervure de renforcement (30, 60, 90, 130) est la distance à partir de l'extrémité de la portion convexe (34, 36, 64, 65, 95, 96, 134, 135) le plus près de la surface supérieure de la vaisselle écologique jusqu'au premier rabat de bord le plus près de la surface inférieure de la vaisselle écologique.

14. La vaisselle écologique selon n'importe laquelle des revendications précédentes, dans laquelle :
la nervure de renforcement (30, 60, 90, 130) est ondulée.
